# EUROPEAN PATENT APPLICATION

(11) **EP 1 752 686 A1**
(43) Date of publication of application: **14.02.2007**
(21) Application number: 05737206.2
(22) Date of filing: 06.05.2005
(51) Int. Cl.: F16H 25/24, F16H 25/22

(54) **BALL SCREW**

(30) Priority: 01.06.2004 JP 2004163374
(71) Applicant: NTN CORPORATION, Osaka-shi, Osaka 550-0003 (JP)
(72) Inventor: NAKAZEKI, Tsugito c/o NTN CORPORATION, Kuwana-shi Mie, 5110811 (JP)
(74) Representative: White, Duncan Rohan
(86) International application number: PCT/JP2005/008363
(87) International publication number: WO 2005/119095

(57) **Abstract**

A ball screw has a screw shaft, a nut, and balls running in a circulating manner along a ball rolling groove of the screw shaft and a ball rolling groove of the nut. A circulating portion (16) for balls (22) is provided on a screw shaft (12) side, and permanent magnets (24) are arranged at an inlet and an outlet of the circulating portion (16).

## Description

### TECHNICAL FIELD

The present invention relates to a ball screw in which a plurality of balls are caused to run in a circulating manner between a screw shaft and a nut and which is used to effect conversion between a linear motion and a rotational motion.

### BACKGROUND ART

A ball circulation method for a ball screw is classified into a method in which a return tube is provided outside the nut, and a method in which a circulation component called a bridge is provided in a part of the screw groove of the nut. The former method is adopted when balls corresponding to a plurality of screw grooves are to be returned, and the latter method is adopted when balls corresponding to one row of screw groove are to be returned.

In a case in which the nut moves along a long screw shaft, a position of arrangement for the circulating portion is restricted to the nut side. However, in the case of a ball screw for use in pulley width adjustment in a metal belt type traction drive device, the stroke involved is small, so the ball screw functions as such regardless of whether the circulating portion is provided on the nut side or on the screw shaft side. JP 2003-148573 A discloses a construction in which the width of a V-pulley is controlled by a ball screw actuator whose nut is equipped with a bridge.

In assembling the ball screw as disclosed in JP 2003-148573 A, after putting the balls between the screw shaft and the nut, the bridge is inserted from outside the nut, and then bonded to the nut. Apart from this process, this ball screw involves a number of factors leading to an increase in cost. For example, a bridge of a complicated configuration is required, and it is necessary to provide the nut with a window allowing insertion of the bridge. Further, since the screw groove and the circulation groove provided in the bridge are two separate things, generation of a step is likely to be involved, which may hinder a smooth flow of the balls.

In this connection, there has been devised a system in which the circulation groove is cut in the screw shaft. By machining the screw groove (ball rolling groove) of the screw shaft and the circulating portion by a single end mill, it is possible to avoid generation of a step as involved in the case of the bridge type ball screw (see JP 2003-97663 A and JP 2003-166616 A).

In either of the methods, however, it is impossible to positively cause the balls to sink in the circulating portion provided in the screw shaft, and jamming of the balls is involved.

### DISCLOSURE OF THE INVENTION

It is a main object of the present invention to realize a smooth ball circulating motion in a ball screw in which balls are caused to run in a circulating manner along a ball rolling groove of a screw shaft and a ball rolling groove of a nut.

The present invention achieves the object by arranging permanent magnets at an inlet and an outlet, respectively, of a ball circulating portion in a ball screw in which the ball circulating portion is provided on a screw shaft side.

According to an embodiment of the present invention, a ball screw includes: a screw shaft having a screw groove in an outer peripheral surface thereof; a nut having a screw groove in an inner peripheral surface thereof; and a plurality of balls provided between the screw groove of the screw shaft and the screw groove of the nut, in which the screw groove of the screw shaft forms a closed loop composed of a ball rolling groove corresponding to approximately one turn and a circulating portion connecting a start point and a terminal point of the ball rolling groove, in which the circulating portion is composed of an inlet portion gradually deepening from the ball rolling groove, a portion deep enough to allow the balls to pass through a bore of the nut, and an outlet portion gradually lessened in depth toward the ball rolling groove, and in which guide means for attracting the balls to the groove bottom are provided at the inlet portion and the outlet portion of the circulating portion.

The guide means may attract a ball with a force larger than a force applied to the ball from contiguous balls before and behind and pushing the ball away from the groove bottom.

The guide means may be formed by permanent magnets embedded in the screw shaft.

The guide means may be formed by partially magnetizing the circulating portion of the screw shaft.

According to the present invention, the ball rolling groove and the circulating portion are continuous with each other and involves no step, so it is possible to realize a smooth ball circulating motion. Further, since the bridge can be abolished, it is possible to achieve a reduction in the thickness and weight of the nut, thereby achieving a reduction in cost.

These and other objects and features of the present invention will become more apparent from the following description given with reference to the accompanying drawings.

### BRIEF DESCRIPTION OF THE DRAWINGS

[Fig. 1] A longitudinal sectional view of an embodiment of the present invention.
[Fig. 2] A plan view of a screw shaft as seen in the direction of the arrow II of Fig. 1.
[Fig. 3] A cross-sectional view of the screw shaft of Fig. 2.
[Fig. 4A] A schematic sectional view showing the behavior of balls at an inlet of a circulating portion.
[Fig. 4B] A schematic sectional view showing the behavior of the balls at the inlet of the circulating portion.
[Fig. 4C] A schematic sectional view showing the behavior of the balls at the inlet of the circulating portion.
[Fig. 4D] A schematic sectional view showing the behavior of the balls at the inlet of the circulating portion.
[Fig. 5A] A vector diagram showing forces acting on balls.
[Fig. 5B] A schematic sectional view of a circulating portion, showing the behavior of balls when there is no magnetic guide in the circulating portion.
[Fig. 5C] A schematic sectional view of the circulating portion, showing the behavior of the balls when there is no magnetic guide in the circulating portion.
[Fig. 5D] A schematic sectional view of the circulating portion, showing the behavior of the balls when there is no magnetic guide in the circulating portion.
[Fig. 6] A cross-sectional view similar to Fig. 3, showing another embodiment of the screw groove.

### BEST MODE FOR CARRYING OUT THE INVENTION

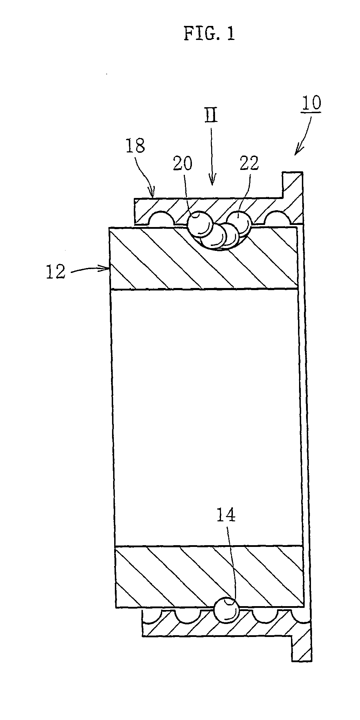

Fig. 1 shows a screw shaft circulation type ball screw 10, in which the ball circulating portion is provided on the screw shaft side. The ball screw 10 is composed of a screw shaft 12, a nut 18, and balls 22. The screw shaft 12 has a ball rolling groove 14 in the outer periphery thereof, and the nut 18 has a ball rolling groove 20 in the inner periphery thereof, with the balls 22 running in a circulating manner along both the ball rolling grooves 14, 20. The ball screw 10 is used as a mechanism for converting a linear motion to a rotational motion or, conversely, a rotational motion to a linear motion between the screw shaft 12 and the nut 18.

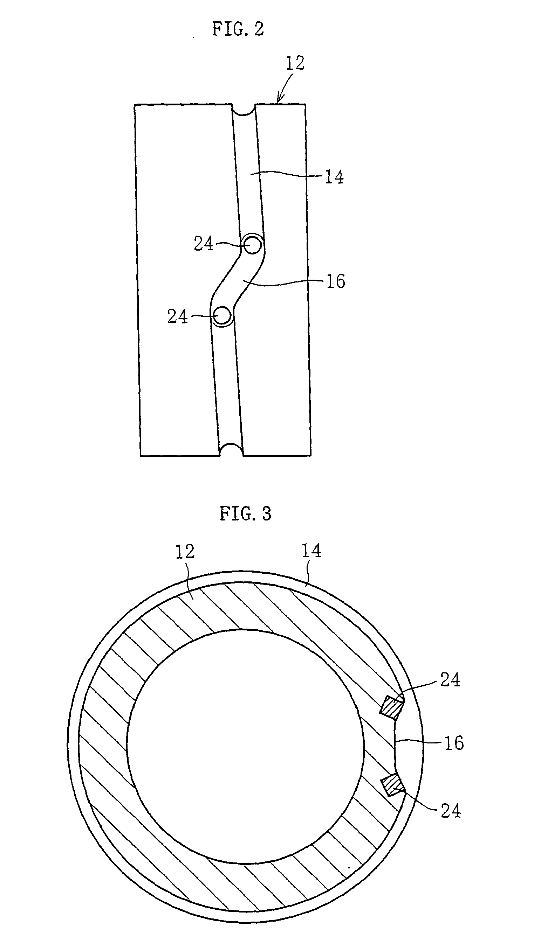

As shown in Fig. 2 and Fig. 3, here, a case is shown in which the screw shaft 12 is provided with the ball rolling groove 14 corresponding to one turn of screw groove. The machining of the screw groove 12 is performed by a ball end mill, and while smoothly changing the direction and depth of the screw groove by the same end mill, there is machined a circulating portion 16 connecting the ends of the ball rolling groove 14. The circulating portion 16 is machined to be deep enough to allow the balls 22 to pass through the bore of the nut 18. Here, for smooth circulation, it is necessary to positively cause the balls 22 to move along the groove bottom of the circulating portion 16 at the deepened inlet of the circulating portion 16. This is effected by a permanent magnet 24. As shown in Fig. 2, the permanent magnet 24 is embedded at the inlet of the circulating portion 16 where the groove starts to deepen.

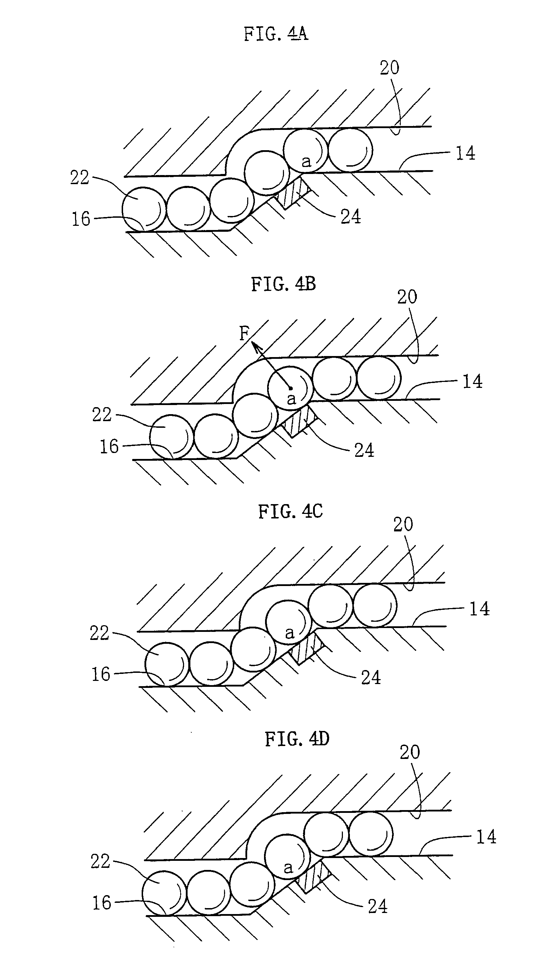

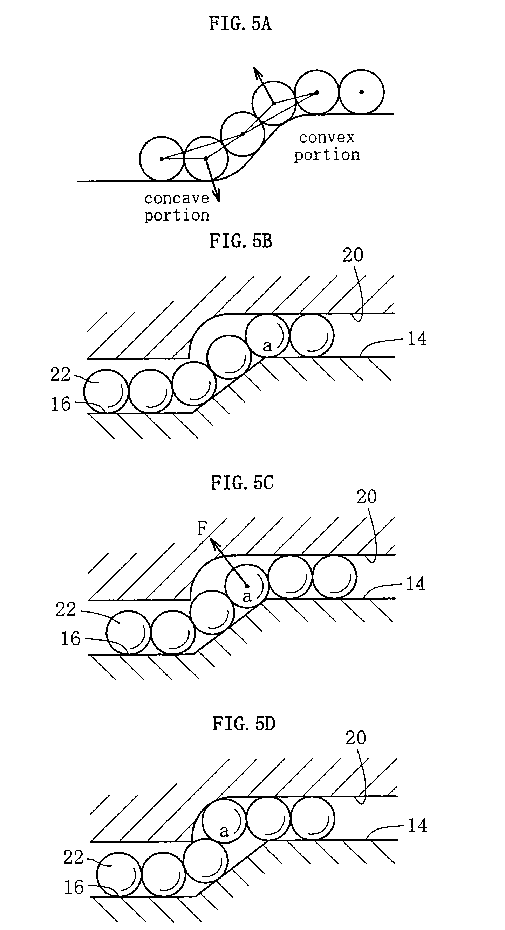

Here, the operation of the permanent magnet 24 will be described in detail. Figs. 4A through 4D are schematic sectional views taken along the circulating portion 16 of the screw shaft 12. Figs. 5A through 5D are schematic diagrams for comparison, showing the behavior of the balls when there is no magnetic guide in the circulation portion. First, the movement of the balls when there is no permanent magnet 24, in other words, when there is no means for attracting the balls to the groove bottom, will be discussed with reference to Figs. 5A through 5D. As shown in Fig. 5A, when a ball entering the circulating portion 16 receives a force from the balls before and behind, an outwardly pressurizing force, that is, a force pushing the ball away from the groove bottom, is applied to that ball at the portion of the inlet having a convex curvature. Thus, as shown in Figs. 5B through 5D, before passing through the circulating portion 16, the ball a is pressed against the ball rolling groove 20 of the nut 18, and gets locked.

In contrast, in a case in which, as shown in Fig. 3, the permanent magnet 24 is embedded in the portion of the circulating portion 16 where its groove starts to deepen, the force with which the permanent magnet 24 attracts the ball a to the groove bottom is stronger than the force F that the ball a receives from the balls before and behind. In other words, there is used a permanent magnet whose magnetic force is stronger than the force pushing the ball away from the groove bottom at the circulating portion 16. Thus, the ball a moves along the groove bottom and can pass through the circulating portion 16 without being locked. In this way, while passing the permanent magnet 24, the ball is not separated from the groove bottom of the circulating portion 16. In the meantime, the ball passes the convex portion. When, thereafter, it reaches a position where no attracting force is exerted from the permanent magnet 24, there is generated no more force pushing the ball away from the groove bottom.

While in Fig. 3 the permanent magnets 24 are embedded, one each, at the inlet and outlet of the circulating portion 16, it is also possible to arrange a plurality of permanent magnets in the circulating portion 16, that is, not only at the inlet and outlet of the circulating portion 16 but also therebetween. Instead of embedding the permanent magnets 24, the same effect can be obtained by using a permanent magnet material for the screw shaft 12 and locally magnetizing the circulating portion 16. Examples of the permanent magnet material include high carbon steel and bearing steel generally used for ball screws and bearings.

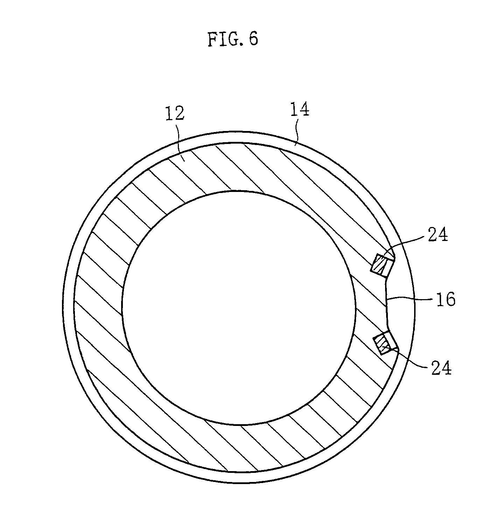

When, as shown in Fig. 6, the upper surfaces of the permanent magnets 24 are sunken from the groove bottom of the circulating portion 16, the force applied from the balls before and behind is also directed to the groove bottom, which, together with the attraction force of the permanent magnets 24, helps to achieve an enhancement in stability.

When a single row of ball rolling groove does not provide the requisite load capacity, a plurality of ball rolling grooves (inclusive of the circulating portions 16) are provided. In this case, the circumferential positions of the circulating portions 16 are designed taking balance into consideration as in a case of the bridge type ball screw. For example, when the grooves are provided in two rows or three rows, it is desirable to arrange them at an interval of 180 degrees or 120 degrees, respectively.

The ball screw device of the present invention is not restricted to the above-described embodiment. Various modifications are of course possible without departing from the gist of the present invention.

## Claims

1. A ball screw, in which a ball circulating portion is provided on a screw shaft side, wherein permanent magnets are respectively arranged at an inlet and an outlet of the ball circulating portion.

2. A ball screw, comprising: a screw shaft having a screw groove in an outer peripheral surface thereof; a nut having a screw groove in an inner peripheral surface thereof; and a plurality of balls provided between the screw groove of the screw shaft and the screw groove of the nut,
wherein the screw groove of the screw shaft forms a closed loop composed of a ball rolling groove corresponding to approximately one turn and a circulating portion connecting a start point and a terminal point of the ball rolling groove,
wherein the circulating portion is composed of an inlet portion gradually deepening from the ball rolling groove, a portion deep enough to allow the balls to pass through a bore of the nut, and an outlet portion gradually lessened in depth toward the ball rolling groove, and
wherein guide means for attracting the balls to the groove bottom are provided at the inlet portion and the outlet portion of the circulating portion.

3. A ball screw according to Claim 2, wherein the guide means attract a ball with a force larger than a force applied to the ball from contiguous balls before and behind and pushing the ball away from the groove bottom.

4. A ball screw according to Claim 2, wherein the guide means are formed by permanent magnets embedded in the screw shaft.

5. A ball screw according to Claim 2, wherein the guide means are formed by partially magnetizing the circulating portion of the screw shaft.
